# EUROPEAN PATENT APPLICATION

(11) **EP 1 162 454 A1**
(43) Date of publication of application: **12.12.2001**
(21) Application number: 00906629.1
(22) Date of filing: 02.03.2000
(51) Int. Cl.: G01N 27/447, B01D 57/02

(54) **TWO-DIMENSIONAL SEPARATING METHOD**

(30) Priority: 02.03.1999 JP 5470899
(71) Applicant: Karube, Isao, Kawasaki-shi, Kanagawa 216-0002 (JP)
(72) Inventor: Karube, Isao, Kawasaki-shi, Kanagawa 216-0002 (JP)
(74) Representative: Grünecker, Kinkeldey, Stockmair & Schwanhäusser Anwaltssozietät
(86) International application number: JP0001230
(87) International publication number: WO0052458

(57) **Abstract**

A method for two-dimensionally separating substances characterized by using separating media independently of each other for two-dimensional separation step. A clear separation image free from distortion of the separation spot is formed. The method can be applied to two-dimensional electrophoresis for proteome analysis, and hence reproducibility can be significantly improved.

## Description

### Technical Field

The present invention relates to technique for separating substances based on their different mobilities through a medium, more specifically to technique for separating and identifying substances based on coordinate information obtained by two-dimensionally developing mixture in combination of two different types of driving forces.

### Background Art

Difference in mobilities of substances through a medium has been utilized for separating and identifying them. For example, electrophoretic analysis based on different mobilities of substances placed in the electric field has been widely used as technique for their characterizations. Electrophoretic analysis performed on gels such as agar and polyacrylamide used as a medium is analytical technique based on the combination of molecular sieve effect intrinsic to these gels and migration phenomena of substances driven by voltage applied on liquid that swells gels. Adjustment of gel density modifies mobilities of substances even in a case where the same driving force is applied. On the other hand, since the driving force obtained by voltage is affected by charged states of substances, behavior of substances can be altered by adjusting their charged states. For example, when electrophoretic analysis of proteins is performed in the presence of a protein denaturant such as sodium dodecylsulfate (hereafter abbreviated as SDS), charged states of proteins forcibly become equalized regardless of their molecular structures, and, in principle, electrophoretic mobilities become to reflect molecular weights. Alternatively, in isoelectric focusing, phenomenon is utilized wherein proteins are converged to pH at which net charges on each of protein molecules become zero in the pH gradient.

Thus, there have been reported methods for separating a large number of substances including proteins using combinations of divergent media and driving forces. However, as separation performed merely once allows only separation based on a single principle, there has been always limitation in the improvement of resolution. For example, it may be easily understood that in principle it is very difficult to separate molecules having molecular weights very close each other based on differences in molecular weights.

Therefore, two-dimensional electrophoresis has been devised by combining different driving principles. In two-dimensional electrophoresis, as separation is carried out based on two different aspects of substances , drastic improvement in resolution can be expected. In two-dimensional electrophoresis, electrophoresis is performed, for example, previously based on isoelectric points and then on molecular weights in different medium (O'Farrell, P. H., J. Biol. Chem. 250, 4007-21, 1975). As a result, substances are two-dimensionally developed based on two different properties, isoelectric point and molecular weight. Therefore, even substances having the same molecular weight can be developed to different coordinates if they differ in isoelectric points . That is, each of substances can be separated as separate spots on two-dimensional coordinate with isoelectric point on the X axis and molecular weight on the Y axis. Two-dimensional electrophoresis is highly estimated as a method for separating proteins in particular because of its excellent resolution.

With a progress of genetic information analysis projects on a large scale such as genome project, a tremendous amount of genetic information has been revealed. From now on, it becomes a big object to carry out functional analyses of genes by elucidating the relation between the genetic information thus revealed and a variety of proteins interacting in complicate manner *in vivo.*

There has been proposed a novel concept expressed by "PROTEOME", a compound word coined by combining PROTEin and genOME (Kahn, P., Science 270, 369-70, 1995). Proteome analysis is a novel attempt to systematically comprehend the relation among a variety of proteins supporting cellular functions. However, analytical techniques available at present require tremendous amounts of time and labors for analyzing proteins as compared with genes. Proteins composing cells are said to be 5000 to 7000 in number, and systematic as well as rapid comprehension of variations in proteome which is the assembly of these proteins full of variety has been strongly demanded.

Two-dimensional electrophoresis of proteins bears an important role in achieving this object. Database used to compare developed patterns obtained by two-dimensional electrophoresis with information on proteins so far identified means so-called catalogue of proteins. If catalogue of proteins of a cell under normal conditions is available, any mutations of the cell can be comprehended as changes in two-dimensional electrophoretic pattern of these proteins. If spots which specifically appear or disappear in electrophoretic pattern of proteins are detected in a cell with mutations, very critical information to surmise functions of a particular protein can be obtained. This kind of information is not only important to find the relation between cellular functions and proteins supporting the functions but also highly possible to lead to great achievements in a wide field of bioindustry such as development of drugs and genetic breeding of plants as well as animals.

Two-dimensional electrophoresis of proteins currently performed is carried out in general as follows. First, isoelectric focusing (a first dimensional separation) is performed using capillary gels or commercial strip gels as separation medium. Gel after the completion of first dimensional electrophoresis is mounted on a second gel for second dimensional electrophoresis. As the second gel has to be electrophoresed at right angle to the first dimensional developing direction, slab gel is used for that purpose. In the case where isoelectric focusing is used for the first dimensional separation., SDS-polyacrylamide gel electrophoresis (hereafter abbreviated as SDS-PAGE) is generally selected for the second dimensional separation. By this combination, proteins are separated first-dimensionally based on isoelectric points (pI), and then developed second-dimensionally based on molecular weights.

Based on methods as described above, two-dimensional electrophoresis has been so far performed for not a few proteomes. Analytical results obtained by amino acid sequencing and peptide mass fingerprinting method performed on isolated protein spots have been recoded together with coordinate information, and stored in databases such as SWISS-2DPAGE (http://expasy.hcuge.ch/ch2d/), etc.

Although two-dimensional electrophoresis known in the art is separating technique with excellent resolution, it is accompanied by critical problems because it has to use slab gels. As already mentioned above, SDS-PAGE is generally used for second dimensional electrophoresis. However, it is difficult to maintain a homogeneous quality over a wide area at the time of preparing polyacrylamide gel. Inhomogeneity of gel results in difference in mobilities. Therefore, it has been admitted that different mobilities near the center of gel and at periphery even for the same protein is an unavoidable phenomenon. Such a phenomenon is referred to as "smiling", causing distortion in electrophoretic images. Distorted electrophoretic images lead to errors in coordinate information, being important cause to exert harmful influence on reproducibility of two-dimensional electrophoresis. In particular, aiming at improving resolution, slab gel with large area is often used. However, the larger the gel surface area, the greater the effect of distortion of electrophoretic images. Therefore, strict quality control is required for electrophoresis.

As a matter of fact, it may not be too much to say that even experimental results obtained under carefully controlled conditions are always susceptible to the effect of distorted electrophoretic images when analytical results of electrophoresis from different labs are compared. As a result, problems have surfaced that it is difficult to discriminate information on adjacent coordinates, or that it is hardly expected to achieve reproducibility sufficient for protein separation from adjacent spots. In other words, in the two-dimensional electrophoretic analysis known in the art, improvement of reproducibility with distortion of electrophoretic images reduced as much as possible has been an important issue to be solved. Although soft wares have been developed for mechanical analysis of separation results, correction of distortion in electrophoretic images by high-grade image processing technique is required for the improved reproducibility.

As a method not necessarily requiring gel, capillary electrophoresis (hereafter abbreviated as CE) has been known in the art. Since CE is performed in narrow spaces (capillary channels) of about 100 µm inside diameter, effects of convection due to the Joule heat generated in conjunction with electrophoresis can be neglected. Therefore, CE may be performed in liquid instead of gel. However, as CE has to be carried out in capillaries of inside diameter ranging only from several tens to one hundred of micrometers, it cannot be applied to two-dimensional electrophoresis requiring the width spanning from several to several tens of centimeters. On the contrary, CE is characteristic in that substances can be easily collected from parts of capillary to which they have been electrophoresed. On the other hand, in slab gels, isolation of substances from spots separated as a result of, for example, electrophoresis requires additional procedures such as electric separation from desired spots or mechanical excision of gels. These procedures are not only complicated but also have left room for improvement of reproducibility as a top priority.

### Disclosure of the Invention

It is an object of the present invention to provide a novel technique for separating substances based on different mobilities on a two-dimensional plane such as two-dimensional electrophoresis using economical and simple procedures with a high reproducibility, which has not been achieved by prior techniques known in the art.

Present inventors have focused attention on inhomogeneity of gels used for second dimensional electrophoresis as a cause of impeding improvement of reproducibility in two-dimensional electrophoresis. It is extremely difficult to secure homogeneity in a large area of gel. Therefore, reproducibility of two-dimensional electrophoresis wherein gel has to be provided as a flat plane is always extremely vulnerable to the influence of homogeneity of gels.

In this regard, present inventors conjectured that the use of gel narrow in width instead of planar one in second dimensional electrophoresis might avoid problems of gel inhomogeneity. However, in the principle of two-dimensional electrophoresis, width of medium sufficient to cover the first dimensional electrophoresed distance is required in second dimensional electrophoresis. Gel narrow in width cannot meet these requirements. Present inventors have solved this problem by using a plurality of parallel narrow gels independently of each other, accomplishing this invention. That is, this invention relates to the following two-dimensional separating method and devise for implementing the method:
(1) a method for two-dimensionally separating substances, wherein a second dimensional separation medium is composed of a plurality of separation media which are independent each other,
(2) the separating method of (1), wherein the separation media are filled into a plurality of physically separated spaces arranged in rows on a planar support,
(3) the separating method of (1), wherein the substances to be separated are proteins,
(4) the separating method of (1), wherein the separating is carried out by electrophoresis,
(5) a two-dimensional separation device composed of the following elements:'
   a) a means for holding a first dimensional separation medium in contact with a second dimensional separation medium,
   (b) a second dimensional separation medium composed of a plurality of separation media which are independent each other, and
   (c) a means for providing a driving force for second dimensional separation,
(6) the two-dimensional separation device of (5), wherein a plurality of separation media which are independent each other are filled into a plurality of physically separated spaces arranged in rows on a planar support,
(7) the two-dimensional separation device of (5), wherein a means for providing the driving force for second dimensional separation is an electric power source to apply voltage to the separation media, and
(8)a second dimensional separation medium composed of a plurality of separation media which are independent each other.

Important conditions to compose the present invention are that second dimensional separation media are composed of a plurality of separation media which are independent each other. Owing to this characteristic, homogeneity of second dimensional separation media which require a certain width can be improved. It is because, regardless of whether medium is gel or other material, the narrower the width the higher the homogeneity can be maintained in the medium. Even in a limited range, ability to secure highly homogeneous conditions leads to more accurate discrimination of separated spots. Needless to say, due to the independence of separation media, each spot obtained as a result of second dimensional separation is always in a state clearly separated at least from the first dimensional direction. This feature in this invention enables the coordinate information on separated spots to be caught as digital data. In other words, since, in this invention, coordinate information is identified by which number of medium at least in the first dimension, this arrangement may be referred to as a sort of digitalization. Therefore, in this invention, accurate separation of spots can be expected in the first dimensional direction. On the other hand, in second dimensional developing direction, discrimination of spots can also be accurately performed based on homogeneity of separation medium. At the mechanical reading of coordinate data, determination of coordinates becomes possible without image correction which requires high grade image processing technique. Thus, performance of spot discrimination is improved, resulting in the improvement in separation reproducibility. This invention enables the easy performance of electrophoretic image analysis based on digitalization in the first dimensional direction and spot separating capability in the second dimensional direction.

In addition, in another embodiment of this invention as described below, it is possible to divide separation media into a plurality of them not only in the second dimension but also the first dimension. In such an embodiment, digitalization can be achieved in development directions of both first and second dimensions.

As clearly seen from the background as described above, the second dimensional separation medium according to this invention is arranged so that it has width corresponding to at least a part of length (separation distance) of the first dimensional separation medium which is further divided into a few sections. There is no particular limitation in the number of divisions and width of individual separation medium. Increasing the number of divisions and narrowing width of individual separation media lead to improvement in resolution. However, since, beyond a certain level, this arrangement brings about only little improvement in resolution, it is desirable to empirically set the division so as to obtain resolution suitable for the analytical purpose. For example, when 5,000 spots are expected, if first dimensional separation distance is divided into 50 to 100 sections, the number of spots per separation medium theoretically becomes 100 to 50, the number to easily discriminate. In this case, an entire separation distance in the first dimension is not necessarily selected as the object for second dimensional separation. For example, when attention is focused on substances present in a certain range of first dimensional separation results, it is possible to perform separation of only the front and rear sections of the portion. In this invention, two-dimensional separation means separation of substances based on a different principle from that of a certain separation process (first dimensional) in a physically different direction.

In general, in two-dimensional separating method, after first dimensional separation is performed, second dimensional separation is carried out with the first dimensional separation medium as sample. Usually, first dimensional separation procedure is performed in a completely independent separation medium, which is, after the separation, brought into contact with a second dimensional separation medium. Alternatively, as long as there is no effect on both separation results, first dimensional separation can be performed subsequently followed by second dimensional separation under the conditions where media for both dimensions are kept in contact each other. In this invention, the term first dimension or second dimension does not mean the order in terms of time but means the development direction. Therefore, as described below, a two-dimensional separating method of this invention includes a case wherein first and second dimensional separations are carried out in parallel.

Separation in this invention means physical separation based on a phenomenon of a substance migration through a medium by any driving forces applied thereto. Examples of driving forces are voltage, centrifugal force, capillarity, magnetic force, electric penetration flow or liquid pumping. Electrophoresis using voltage is a driving principle widely used as two-dimensional electrophoresis. These driving forces can be used for both first and second dimensional separations. In addition, any driving principles can be combined in any desired orders. Furthermore, by modulating conditions of separation media for each driving force, a variety of separating conditions can be fabricated. In the following, specific examples of conditions usable for first or second dimensional separation of this invention will be described.

In the case of so-called electrophoresis using voltage as driving force, for example, following moving conditions may be provided. That is, examples of these conditions are pH gradient, molecular sieve, interaction with functional groups brought into contact in electrophoretic medium. Application of electrophoresis in a medium provided with the pH gradient to proteins means isoelectric focusing. Electrophoresis performed in a medium having molecular sieve effects such as polyacrylamide gel, if protein denaturants such as SDS, urea or guanidine are co-present, establishes a molecular sieve electrophoresis under denaturing conditions. Alternatively, in the absence of denaturants, it becomes electrophoresis under native conditions. Furthermore, media provided with a variety of functional groups can be utilized. Specific examples are affinity substances capable of electrostatic interaction, forming hydrogen bond and hydrophobic bond, or any desired combinations thereof. Examples also include combinations of affinity substances such as antigen-antibody, avidin-biotin and sugar-lectin. These conditions can be applied to other driving forces than electrophoresis.

Whatever driving principle is applied, in this invention, second dimensional separation must be carried out by a plurality of separation media which are independent each other. In this invention, "conditions under which separation media are independent each other" can be defined as follows. That is, conditions under which no migration of substances to be analyzed occurs between individual separation media by the driving force for second dimensional separation can be referred to as conditions under which separation media are independent each other. For example, when separation media are physically blocked each other, it can be said that they are under the conditions wherein they are independent each other. More specifically, in the case of using polyacrylamide gel as medium, a plurality of strip type gels placed in parallel in spaces separated each other can be used as second dimensional separation media. For example, as shown in examples, a plurality of grooves are provided on a planar support, to which another plate is adhered to cover those grooves, and thereby a support having a plurality of spaces arranged in rows blocked from each other is formed. By filling gels into the spaces thus formed, a plurality of media according to this invention which are independent each other is obtained. Intervals between grooves may be adjusted so that required resolution can be obtained. Alternatively, grooves are provided alternately on both sides of a support, which is pasted sandwiched between two other plates, and thereby a continuous gel without intervals is two-dimensionally formed. Furthermore, by providing partially overlapping grooves on both sides of support, gels can be more closely arranged.

In examples, strip-type gels of 1.5 mm wide were used as separation media. However, the width of separation medium of this invention can be made further narrower. For example, in the case where separation medium is retained in grooves provided on support in a similar manner as examples, it is possible to reduce these grooves to spaces as fine as 1 to 100 µm wide. Cross-sections of groove can be polygonal such as triangular and square, or U-shaped and semicircular. Such grooves in fine structure can be provided on a support such as glass using the following methods:
- a wet etching method in semiconductor processing technique (a method using hydrofluoric acid),
- a dry etching method in semiconductor processing technique (an ion spattering, reactive ion etching (ICP etching, etc.)),
- a laser boring method, and
- a dicing saw method (capable of cutting in about 10 µm width).

Furthermore, attempt for performing electrophoresis by filling separation medium into fine grooves provided on a support has been known in the art (Science Vol. 261, 895-897, 1993). With electrophoresis performed inside such fine grooves, development of substances due to the electroosmotic flow can be expected. That is, separation based on a similar principle as that of capillary electrophoresis can be achieved. By turning on electricity to the inside of space composed of fine glass wall, hydrated cations on glass surface migrate toward cathode, and thereby phenomenon of solvent migration toward cathode is macroscopically observed. This phenomenon is referred to as electroosmosis, having great significance as the driving force for development of substances in capillary electrophoresis (ed. Biochemical Society of Japan, A New Experimental Biochemistry, "Protein I, Separation, Purification and Characterization", p.340, 1990).

In performing a separating method according to this invention using fine grooves provided on support, first dimensional separation medium can be placed on the same support together with second dimensional separation medium. For example, a groove into which first dimensional separation medium is filled is provided along the one edge of a support. Then, a plurality of grooves branching out from this first dimensional groove are provided to be used for second dimensional media. Support as a whole can take any desired shape, but a near regular square shape is preferable for the mechanical scanning of electrophoretic images. Therefore, it is desirable to design second dimensional separation media so that they branch off from first dimensional separation medium at near right angles. In this embodiment, since individual grooves to be filled in with separation medium are fine, even though, for example, 100 grooves of 30 µm wide arranged in parallel with intervals of 20 µm are used as second dimensional separation medium, the width required to arrange them in rows is merely 5 mm. That is, two-dimensional separation can be performed on a support of merely 5-mm square. Namely, according to this invention, a tip for two-dimensional separation in the size of merely 5-mm square can be realized.

Alternatively, a composition can be arranged so that first dimensional separation medium is placed on a concentric circle in the central part of a disciform support, from which second dimensional medium is provided extending toward the periphery. Such a tip composed for two-dimensional separation enables the easy as well as speedy optical scanning of support as a whole by rotating the discal support. Second dimensional separation can be performed also by centrifugation using rotation mechanism.

By using a highly integrated tip, either square or circular, for two-dimensional separation according to this invention, migration distance is made shorter and thereby migration time is reduced, so that a dramatic improvement in the throughput of two-dimensional separation can be expected together with an improved reproducibility by this invention.

Furthermore, since separation media are different in type between first and second dimensions, first, second dimensional separation medium may be filled in grooves as a whole, and then the medium in first dimensional groove is replaced with first dimensional medium. In capillary electrophoresis, separation medium needs not be gel, and liquid medium may be used. In the case where separation medium is liquid, this procedure to exchange separation medium inside capillary can be readily carried out by micropump or electroosmotic flow. Alternatively, in the case where driving principles are different between first and second dimensions, two-dimensional separation can be performed sometime using the same medium as a whole. For example, in the case where centrifugation is used for first dimension while electrophoresis is performed for second dimension, separation can be carried out in the identical medium without changes. In the case where first dimensional separation is performed based on centrifugation, simultaneous separation can be implemented by arranging a plurality of two-dimensional separation tips according to this invention on concentric circle.

In addition, a plurality of capillaries may be arranged in a stack to be used. In the case where obstacles of heat radiation by stacking a plurality of capillaries up are expected, adjacent capillaries may be alternately fixed at an angle to prevent them from close adhesion. In the case where capillaries are used as two-dimensional separation medium in this invention, their features to enable easy separation of substances can be fully used. More specifically, each capillary can be provided with a means for collecting substances so that separated substances can be recovered as the occasion demands. Alternatively, while monitoring the moving state of a desired substance, separation process can be stopped at the time when it reaches the terminus of second dimensional separation medium thereby to obtain the desired substance. This method will facilitate the substance collection also in the case where gel medium is used instead of capillary. Feasibility for easy substance collection is important feature of this invention.

In a preferred embodiment of this invention, second dimensional separation medium is composed of a plurality of gels which are independent each other instead of a single slab gel. Utilization of this feature enables third dimensional separation. That is, since individual independent gels have similar structure as that of first dimensional separation medium, they can further become materials for another separation procedure. Therefore, this embodiment enables a particular separation technique comprising, for example, isoelectric focusing for the first dimension, immunoelectrophoresis for the second dimension, and further SDS-PAGE for the third dimension. Such application cannot be made by methods known in the art wherein second dimensional separation has to be performed on flat plane.

In the case where capillarity is used as driving force, filter paper, nitrocellulose or cellulose acetate is used as medium. To arrange these media in a state wherein they are independent each other, medium immobilized on support such as polyethylene is cut into strips, which are arranged in parallel at intervals. If strips are arranged in rows by pasting the supports each other, a plurality of strips can be lined up in rows independently of each other flatly with no gap between.

A case of variation has been so far described, wherein second dimensional separation medium is comprised of a plurality of separation media which are independent each other. In this invention, further, even first dimensional separation medium can be arranged as a plurality of separation media which are independent each other. In this embodiment, a state wherein first dimensional separation media are independent each other can be defined as the state wherein no development of substances to be analyzed occurs into adjacent separation media with the driving force for first dimensional medium. For example, grooves with hydrophobic groups immobilized on inner walls are used as first dimensional separation medium, while grooves with amino groups immobilized on inner walls are utilized as second dimensional separation medium. Both of them are intersected each other like a mesh to compose a matrix, which is structurally arranged so as to allow physical migration of substances at the intersecting parts. Here, focusing attention on one of grooves in the first dimensional direction, indeed it is connected to adjacent groove through the intermediary of second dimensional separation medium. However, since no migration of substances is considered to occur in second dimensional separation medium by the driving force for first dimensional separation medium, this arrangement can be referred to as a state wherein migration of substances into adjacent first dimensional separation medium will not occur. In this example, when a test sample applied to one selected point is developed by capillarity, two-dimensional separation can be performed. Specifically, in first dimensional direction, affinity due to interactions of hydrophobic molecules serves as driving force, while, in contrast, affinity due to interactions of hydrophilic molecules provides driving force. Liquid itself (solvent) composing test samples evenly diffuses by capillarity to either first dimensional or second dimensional direction, however, since driving forces as described above act on solutes, two-dimensional separation is established. With the use of constant amount of sample every time, separation and identification of substances can be achieved by detecting coordinates to which the substances are developed at the time when diffusion by capillarity stops.

In this invention, besides proteins, a variety of substances including organic compounds such as nucleic acids, microorganisms such as bacteria and viruses, animal and plant cells or inorganic ions which have been known to be analyzed by diverse separation techniques in the art can become objects for analysis. Among these objects for analysis, proteins in particular are substances for which analysis by two-dimensional electrophoresis bears a great significance. At present, two-dimensional electrophoresis of proteins has become important technique for analyzing the aforementioned proteome. To apply the present invention to proteome analysis, the following procedures are performed.

First, test sample of proteome which has been prepared by methods known in the art is subjected to first dimensional electrophoresis. Two-dimensional electrophoretic analysis of proteins is usually carried out by isoelectric focusing for the first dimension followed by SDS-PAGE for the second dimension. Therefore, isoelectric focusing is performed using strip gels and capillary gels as medium. Specifically, test sample of proteome is applied to the center of a medium with pH gradient, one end of the medium is immersed in anodal buffer and the other end in cathodic buffer, and electrophoresed by turning the electricity on for an appropriate duration of time. Prior to electrophoresis, proteome samples can be fluorescently labeled. At this time, isoelectric focusing markers are also electrophoresed under the same conditions.

Medium obtained as a result of first dimensional electrophoresis is brought into contact with medium for second dimensional SDS-PAGE. Second dimensional polyacrylamide gels can be arranged in a state wherein they are independent each other by polymerizing acrylamide in spaces composed, for example, by adhering a planar substrate provided with grooves to another plate. First dimensional electrophoretic medium is closely adhered to opening on one side of gel media which are independent each other, and SDS-PAGE is performed under these conditions. Individual proteins composing the proteome developed in first dimensional gel migrate to the nearest second dimensional gel respectively out of those gels which are independent each other, and are developed based on their respective molecular weights. Molecular weight markers are also electrophoresed under the same conditions.

Protein spots are confirmed on gels after the completion of second dimensional electrophoresis. At this time, if proteins are fluorescently labeled, spots can be confirmed by monitoring their fluorescence. In addition, protein spots can be verified by CBB and silver stains. Proteins thus separated can be identified based on coordinate information by referring for comparison to results of two-dimensional electrophoresis performed under the identical conditions. Or, to proceed with analysis o;f unknown proteome, identification of proteins in individual spots is further carried out.

Identification of proteins is performed based on amino acid sequence analysis and peptide mass-finger print method. Amino acid sequence can be determined from amino terminal by technique such as Edman degradation method. At this stage, entire amino acid sequence of proteins need not be determined. Even partial amino acid sequences, if available, become critical information enabling the protein identification. Many proteins are often blocked at their N-terminuses, in a state unfavorable for sequencing. One of techniques for accurately sequencing amino acids of this type is a method wherein protein fragments obtained by digestion with proteases are sequenced. Though digestion with proteases occurs at diverse sites depending on proteins, protein identification can be carried out by referring partial amino acid sequences thus determined to database of amino acid sequences known in the art.

On the other hand, compared with amino acid sequencing which requires labor-intensive operations, the peptide mass-fingerprinting method can more speedily provide a variety of information useful for protein identification. By digesting proteins contained in spots separated as a result of two-dimensional electrophoresis with a predetermined protease, and analyzing fragments thus obtained using a mass spectrogram, mass patterns of protease-digested fragments (i.e. fingerprints) are obtained. Since peptide mass fingerprints are highly unique information on respective proteins, and databases such as ProteinProspector (http://prospector.ucsf.edu/) accumulating these data can be utilized on the internet, proteins can be identified based on peptide mass fingerprints.

In proteome analysis, two-dimensional electrophoretic patterns of proteomes under a variety of conditions are compared to detect ebb and flow of spots related to particular functions. Proteins comprising spots which disappear in proteomes of cells under particular conditions, or in contrast specifically appear are considered to be highly likely to be involved in functions of interest. If these proteins can be identified based on partial amino acid sequences and peptide mass finger prints thereof, their relation to functions of interest can be surmised. Alternatively, if protein is unknown in the field, genes supporting functions of interest and protein functions can be elucidated by carrying out protein isolation and further cloning of gene encoding the protein and factors controlling the gene.

The present invention also provides a device for two-dimensional separation according to this invention. A two-dimensional separating device of this invention consists of the above-described elements a) to c). Element a), which is a means for maintaining first dimensional separation medium in contact with second dimensional separation medium, is to hold a medium, wherein substances which can be obtained as a result of first dimensional separation have been developed in first dimensional direction, so that the medium can be subjected to second dimensional separation without any other treatments. Direction of second dimensional separation is usually at a right angle to first dimensional direction. However, since separation angle is not an essential factor to affect results, there is no limitation in the contact angle of first dimensional separation medium to second dimensional separation medium. In the case where electrophoresis is performed for second dimensional separation, the devise must be arranged so that separation media for the first and second dimensions are in contact with each other without any gaps between, and maintained in that way at least until migration of all objects for analysis from first dimensional medium to second dimensional medium is completed.

Next, element b comprises second dimensional separation media which are independent each other as described above. Furthermore, element c is a means for providing the driving force for second dimensional separation, namely, in the case of electrophoresis, comprising electric source to provide voltage, means for turning electricity on to connect electrophoretic media, and electrodes. In the case of the use of centrifugal force as driving force, element c is comprised of a rotating devise to provide required g.

A two-dimensional separating device of this invention is preferably equipped with a temperature controller so that second dimensional separation media in particular can be maintained under homogeneous temperature conditions. Since a plurality of electrophoretic media are used in combination in this invention, maintenance of homogeneous conditions among separation media is essential for achieving high reproducibility. In the case of performing second dimensional separation by electrophoresis in particular, temperature control of separation media is highly significant because of heat generation (Joule heat) by turning electricity on. Temperature controller can be composed by placing separation media in a water bath equipped with thermostat or in a temperature controllable closed space. Needless to say, when, with type of driving forces or under certain separating conditions, temperature does not greatly affect separation results, importance of temperature controller is diminished.

Two-dimensional separating device according to this invention may be provided with mechanisms for pretreatment to supply test samples as analytical objects and standard substances such as molecular markers. For example, if a device is provided with a means for mechanically performing steps for isolating cells from culture and disintegrating the cells to obtain proteomes, proteome analysis can be automated. For example, techniques have been known in the art wherein bacteria are isolated using a flow cell provided with agarose layer formed on platinum electrode, and further treated with enzymes to extract nucleic acids thereof (Heller, et. al. Nature Biotechnology 16/6, p541-6, 1998). Such isolation techniques can be utilized as pretreatment means for two-dimensional isolating device according to this invention.

In addition, a two-dimensional separating device according to this invention can be installed with a sensor for reading results of two-dimensional separation. In the case where objects to be analyzed are fluorescently labeled proteins, coordinate information can be mechanically read by scanning second dimensional separation media with a fluorescence sensor. Alternatively, a means can be incorporated wherein not only second dimensional separation but also first dimensional separation are carried out, so that the latter separation medium is arranged to be automatically provided to second dimensional separation medium. Two-dimensional separating device provided with such mechanisms according to this invention can automate almost all processes required for two-dimensional separation, contributing to dramatic improvement of efficiency in proteome analysis.

Furthermore, this invention relates to a two-dimensional separation medium composed of a plurality of isolation media which are independent each other, or to the use of a plurality of isolation media which are independent each other in a two-dimensional separating method. Such media for a two-dimensional separation can be obtained by aforementioned methods. Two-dimensional separation media according to this invention are useful for the substance separating method and two-dimensional separating device of this invention.

### Brief Description of the Drawings

Fig. 1 is a photograph showing Two-dimensional electrophoresis images according to this invention. In this figure, the X-axis represents the direction of first dimensional electrophoresis (isoelectric focusing) and Y-axis is that of second dimensional electrophoresis (SDS-PAGE).
Fig. 2 is an enlarged photograph of a portion in Fig. 1.
Fig. 3 is an enlarged photograph of one of independent electrophoretic media in Fig. 1.

### Best Mode for Carrying out the Invention

Example 1 Two-dimensional electrophoresis according to this invention

### 1. Molecular weight markers

Using commercial protein molecular weight markers as test samples, two-dimensional electrophoretic analysis according to this invention was carried out. Test samples used are the Full Range Rainbow™ marker (molecular weight markers) and IEF standards (isoelectric focusing markers). Compositions of proteins contained in each marker are shown below. Full Range Rainbow™ marker (Amersham-Pharmacia)

| Molecular weight (kDa) | Color |
|---|---|
| 250 | blue |
| 160 | red |
| 107 | green |
| 77 | yellow |
| 52 | purple |
| 35 | blue |
| 30 | orange |
| 25 | green |
| 15 | blue |
| 10 | red |

| IEF standards (Bio-Rad) | | | |
|---|---|---|---|
| Protein | Color | Isoelectric point | Molecular weight |
| Phycocyanin (3 bands) | blue | 4.45 | 232,000 |
| | | 4.65 | |
| | | 4.75 | |
| β-Lactoglobulin B | | 5.1 | 18,400 |
| Bovine carbonic anhydrase | | 6.0 | 31,000 |
| Human carbonic anhydrase | | 6.5 | 28,000 |
| Equine myoglobin (2 bands) | brown | 6.8 | 17,500 |
| | | 7.0 | |
| Human hemoglobin A | red | 7.1 | 64,500 |
| Human hemoglobin B | red | 7.5 | 64,500 |
| Lectin (lentil) (3 bands) | | 7.80 | 49,000 |
| | | 8.00 | |
| | | 8.20 | |
| Cytochrome C | red | 9.6 | 12,200 |

### 2. Gel for second dimensional electrophoresis

To perform a two-dimensional electrophoresis based on this invention, gels for two-dimensional electrophoresis composed of a plurality of polyacrylamide gels which are independent each other were prepared. A glass plate on which grooves were cut was adhered to another glass plate to form a plurality of spaces arranged in rows which are independent each other, and acrylamide was polymerized in those grooves, which served as media for second dimensional electrophoresis.

First, on an air bubble-free glass plate of 10 cm x 10 cm x 3 mm thick (Corning 7740 Pyrex, surface flatness ± 30 µm), 23 grooves (1 mm deep x 1.5 mm wide) were cut with 1.2 mm intervals using a dicing saw with a 300 µm thick blade (disco: DQAQφ634) fixed. The glass plate with grooves cut was coated with a photosensitive adhesive (Bonefix), overlaid with another glass plate (having a cut-off portion of 8 cm wide x 1.5 cm high, which served as a well whereto first dimensional electrophoretic gel was attached), and adhered together by irradiating them with ultraviolet light for 1 min.

A solution comprising the composition described below was prepared, deaerated using 0.2 µm filter, mixed with 100 µl of N,N,N',N'-tetramethylethylenediamine (TEMED), immediately filled spaces between the glass plates, and polymerized. Final concentrations were shown in parentheses.
30% acrylamide stock solution 15.8 ml (4.75%),
0.75 M Tris-HCl buffer solution (pH 8.8) 50 ml (0.125 M), 10% SDS 1 ml (0.1%), and
10% ammonium persulfate (APS) 335 µl (0.0335%),
Total 100 ml.

30% acrylamide stock solution: acrylamide monomer (58 g) and N,N'-methylenebisacrylamide (2 g) were dissolved in distilled water to make a final volume of 200 ml.

### 3. Two-dimensional electrophoresis

Molecular weight markers described above were mixed, and isoelectric focusing of these markers was carried out using a commercial precast gel Multiphor Immobiline DryStrip pH 3 - 10L 70 x 3 x 0.5 mm (Amersham Pharmacia). The gel subjected to first dimensional isoelectric focusing was pasted into the well of the glass plates which had been filled with polyacrylamide prepared in the above (2), and SDS-PAGE was performed in the vertical direction at 500 V (24 mA) for 15 min. By two-dimensional electrophoresis of this invention, it was confirmed that spots of individual proteins could be clearly separated at exact places theoretically predicted.

### Example 2 Proteome analysis

To demonstrate the usability of two-dimensional electrophoretic analysis according to this invention for proteome analysis, two-dimensional electrophoresis was attempted using crude protein products from *E. coli* as model test sample. *E. coli* cultured in LB medium overnight was collected by centrifugation, ultrasonicated, and further centrifuged to recover the supernatant as crude protein product of *E. coli.* This crude product (protein concentration about 20 µg/ml) was fluorescently labeled with a commercial fluorescence labeling reagent, FluoroLink Reactive Dye (Amersham Pharmacia) according to the instruction supplied with the merchandise.

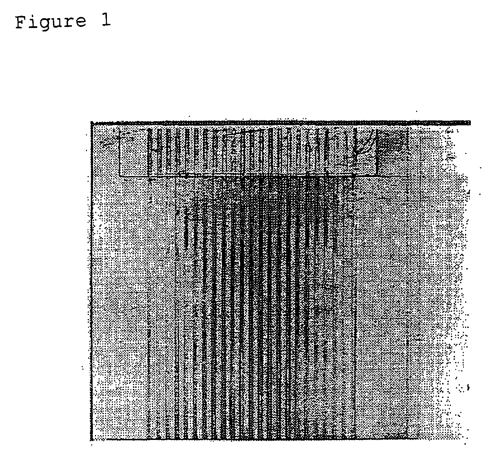

With fluorescently labeled crude protein product of *E. coli* as test sample, two-dimensional electrophoresis was performed according to the same procedure as in Example 1. After two-dimensional electrophoresis, the glass plate was examined using a fluorescence image analyzer FluoroImager 595 (Molecular Dynamics) at fluorescence wavelength 530 nm with excitation wavelength fixed at 488 nm. The results are shown in Figs. 1 to 3.

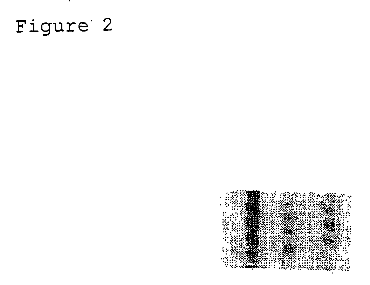

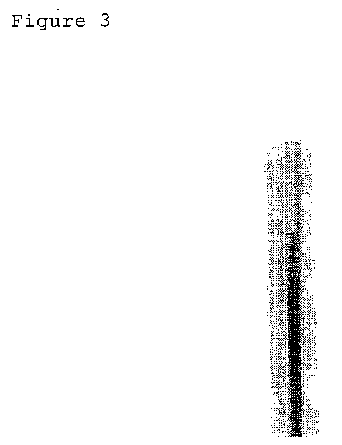

As clearly seen from Fig. 1 or Fig. 2 representing an enlarged a portion of Fig. 1, since second dimensional electrophoretic gels are independent each other, spots in the X-axis direction (moving direction of isoelectric focusing) are naturally completely separated. Also as obviously understood from Fig. 3 representing one enlarged independent gel for the second dimension, since electrophoresis in the Y-axis direction (moving direction of SDS-PAGE) was carried out in gels of the limited width, individual spots can be clearly discriminated each other. In contrast, in the case where similar test sample is electrophoresed on a conventional two-dimensional gel, smiling phenomenon is often observed wherein edges of individual spots become indistinguishable due to the distortion of electrophoretic images.

### Industrial Applicability

According to this invention, extremely clear spots can be obtained by a simple composition wherein second dimensional separation media are composed of a plurality of separation media which are independent each other. Application of this invention to two-dimensional electrophoresis of proteins enables the separation of proteins as spots free from distortion. Clear spots are highly advantageous both for analysis of electrophoretic results of proteins in terms of coordinate information and for isolation of proteins from spots as samples for identification.

In the conventional two-dimensional electrophoresis, distortion of spots to a certain extent due to inhomogeneity of gels is hardly avoidable even under highly controlled conditions . In contrast with this, in this invention, analytical results with an excellent reproducibility can be achieved without paying any particular attention. This feature is extremely important in the proteome analysis requiring analyses of tremendous amount of proteins. This is because analytical reproducibility is an important factor for efficiently sharing two-dimensional electrophoretic results among a plurality of researchers or research institutes. Therefore, two-dimensional electrophoresis provided by this invention can be expected to be a useful tool for the proteome analysis.

Furthermore, this invention enables the utilization of capillary electrophoresis (CE) also in second dimensional electrophoresis. Since CE is easy to perform on microchips, this invention enables two-dimensional electrophoresis to be carried out on microchips. As a result, it is considered to tremendously improve the throughput capacity of two-dimensional electrophoresis. In addition, CE is characteristic of its easiness to collect substances, contributing to improvement of efficiency in the process to collect substances in two-dimensional electrophoresis.

## Claims

1. A method for two-dimensionally separating substances, wherein a second dimensional separation medium is composed of a plurality of separation media which are independent each other.

2. The separating method of claim 1, wherein the separation media are filled into a plurality of physically separated spaces arranged in rows on a planar support.

3. The separating method of claim 1, wherein the substances to be separated are proteins.

4. The separating method of claim 1, wherein the separating is carried out by electrophoresis.

5. A two-dimensional separation device composed of the following elements:
a) a means for holding a first dimensional separation medium in contact with a second dimensional separation medium,
b) a second dimensional separation medium composed of a plurality of separation media which are independent each other, and
c) a means for providing the driving force for second dimensional separation.

6. The two-dimensional separation device of claim 5, wherein a plurality of separation media which are independent each other are filled into a plurality of physically separated spaces arranged in rows on a planar support.

7. The two-dimensional separation device of claim 5, wherein a means for providing the driving force for second dimensional separation is an electric power source to apply voltage to the separation media.

8. A second dimensional separation medium composed of a plurality of separation media which are independent each other.
